# EUROPÄISCHE PATENTANMELDUNG

(11) **EP 1 826 314 A1**
(43) Veröffentlichungstag der Anmeldung: **29.08.2007**
(21) Anmeldenummer: 06023176.8
(22) Anmeldetag: 08.11.2006
(51) Int. Cl.: D21B 1/34

(54) **Verfahren zum Auflösen und Reinigen von störstoffhaltigen Papierrohstoffen**

(30) Priorität: 24.02.2006 DE 102006008761
(71) Anmelder: Voith Patent GmbH, 89522 Heidenheim (DE)
(72) Erfinder: Piper, Michael, Appleton, 54914 (US)

(57) **Zusammenfassung**

Das Verfahren dient zum Auflösen und Reinigen von störstoffhaltigen Papierrohstoffen, insbesondere von Altpapier. Diese werden z.B. in einen Stofflöser (1) eingetragen und mit Wasser (W) vermischt. Während ein Gutstoff (A1) durch ein Pulpersieb (12) abgezogen wird, gelangt ein Teilstrom (T) aus dem Stofflöser (1) in einen Absetzbehälter (4) und dann mit Hilfe eines Pumpapparates (2) in einen geschlossenen Siebapparat (7). Aus der Druckleitung (8) des Pumpapparates (2) wird ein Rezirkulationsstrom (A2) in den Absetzbehälter (4) zurückgeführt. Diese Fahrweise erhöht die Betriebssicherheit des Auflösesystems und vergleichmäßigt die Stoffströme.

## Beschreibung

Die Erfindung betrifft ein Verfahren gemäß dem Oberbegriff des Anspruchs 1.

Bekanntlich werden in einem großen Umfang Papierrohstoffe zur Papierherstellung verwendet, welche einen mehr oder weniger großen Anteil an Störstoffen enthalten. Derartige Störstoffe sind überwiegend Kunststoffteile und -folien, Drähte, Glasscherben, Sand etc. Selbstverständlich sollen die Störstoffe möglichst vollständig entfernt werden. Zum einen, um die zur Bearbeitung benutzten Maschinen vor Verschleiß zu schützen und zum anderen wegen der Qualitätsanforderungen an das spätere Papier. Bewährt haben sich Verfahren, bei denen der Papierrohstoff zuerst in einem Stofflöser, z.B. bei einem Trockengehalt zwischen 4 und 8 %, aufgelöst wird, indem der Papierrohstoff nach Vermischung mit Wasser durch mechanische Bearbeitung zerteilt wird, wobei ein großer Teil der Störstoffe seine Festigkeit beibehält. Dadurch bleiben z.B. Plastikfolien relativ großflächig erhalten, und die Papierbahnen können in Einzelfasern oder Stippen zerlegt werden. Oft werden die größten Störstoffe direkt aus dem Stofflöser entfernt, z.B. in einem Zopf.

Beim Auflösen entsteht eine Suspension, die in der Regel pumpfähig ist und einen relativ hohen Anteil von Störstoffen enthält. Bei einem Verfahren dieser Art, z.B. gemäß DE 102004015011, wird ein stark verschmutzter Stoffstrom direkt aus dem Auflöser abgeleitet, während ein weniger verschmutzter Stoffstrom als Gutstoff durch ein im Auflöser eingesetztes Sieb abgepumpt wird.

Ein dem Auflöseapparate nach geschalteter Siebapparat nimmt eine stark verunreinigte Suspension auf. Durch das im Siebapparat vorhandene Sieb hindurch können Faserbestandteile, welche keine groben Störstoffe mehr enthalten, als Gutstoff-Fraktion abgezogen werden. In der Regel sind auch für diesen Gutstoff weitere Reinigungsvorgänge erforderlich, bis ein Papier daraus erzeugt werden kann.

Der Erfindung liegt die Aufgabe zu Grunde, ein Verfahren der angegebenen Art zu schaffen, mit dem es möglich ist, auch Papierrohstoffe mit hohem Störstoffgehalt wirtschaftlich und betriebssicher aufzubereiten.

Diese Aufgabe wird durch die im Kennzeichen des Anspruchs 1 genannten Merkmale bei dem im Oberbegriff angegebenen Verfahren gelöst.

Die Erfindung wird beschrieben und erläutert an Hand einer Zeichnung, die ein Schema einer für das Verfahren geeigneten Anlage zeigt.

Darin erkennt man einen Stofflöser 1, in den Papierrohstoff P, insbesondere Altpapier, und Wasser W eingefüllt werden. In an sich bekannter Art und Weise wird der Papierrohstoff P mit dem Wasser W vermischt und bei einem Trockengehalt von ca. 4 bis 8 % durch einen Rotor 11 mechanisch bearbeitet und zu einer Suspension aufgelöst. Der überwiegende Teil der so gebildeten Suspension wird als Gutstoff A1 kontinuierlich durch ein im Boden des Stofflösers 1 eingesetztes Pulpersieb 12 hindurch abgepumpt, wozu die Pumpe 10 dient. Ein anderer gröberer und stark verunreinigter Teil gelangt aus dem Stofflöser unter Umgehung dieses Pulpersiebes 12 als Teilstrom T in einen Absetzapparat 4 zur Abtrennung der gröbsten Schwerteile. Als Trennkraft reicht meist die Schwerkraft aus, es kann aber auch eine Verstärkung durch Zentrifugalkräfte (Rotationsströmung) zweckmäßig sein. Die Suspension gelangt dann in den zentralen Einlauf eines Pumpapparates 2, der geeignet ist, auch stark verschmutzte Suspensionen zu pumpen. Mit Vorteil löst dieser Pumpapparat 2 das Papier auch weiter auf. Er kann ein zylindrisches oder auch konisches Gehäuse mit einem Flügelrotor aufweisen, der sowohl für die Druckerhöhung als auch für eine Fortsetzung der Auflösung sorgt. Die Druckleitung 8 schließt tangential an das Gehäuse an.

Erfindungsgemäß wird von der Druckleitung 8 ein Teil der dort fließenden Suspension als Rezirkulationsstrom A2 in den aus dem Stofflöser 1 abgezogenen Teilstrom T zurückgeführt. Dieser Rezirkulationsstrom A2 gelangt durch die Rückführleitung 8' in den Absetzapparat 4 und dann erneut in den Pumpapparat 2, was den besonderen Vorteil hat, dass die Auflösewirkung dieses Pumpapparates erneut genutzt werden kann. Daher kann sich auch die Trennwirkung des Absetzapparates 4 erneut auswirken und weitere frei gelegte Schwerteile herausholen. Das bringt unter anderem geringeren Verschleiß der nach geschalteten Apparate. Besonders dann, wenn die Störstoffe R7 in Zeitintervallen aus dem - später beschriebenen - Siebapparat 7 abgezogen werden, ist der Rezirkulationsstrom A2 vorteilhaft: Während des Spülvorganges, also so lange der Siebapparat 7 keine Suspension vom Pumpapparat 2 aufnehmen kann, wird diese Zeit genutzt, um in der Zirkulation mit Absetzapparat 4 und Pumpapparat 2 sowohl die Auflösung weiter zu führen, als auch weitere inzwischen frei gelegte Schwerteile zu entfernen.

Es ist günstig, die Abzweigung der Rückführleitung 8', die den Rezirkulationsstrom A2 aufnehmen soll, möglichst nahe am Einlaufstutzen zum Siebapparat 7 anzubringen. Dadurch reduziert sich zunächst die Verstopfungsgefahr in der Zuleitung zum Siebapparat 7, die deshalb besteht, weil der Stoffstrom zeitweise unterbrochen wird. Außerdem wird ein großes Puffervolumen in der entsprechenden Rückführlleitung 8' zur Aufnahme des Rezirkulationsstromes A2 geschaffen.

Der Siebapparat 7 umfasst ein geschlossenes, z.B. teils zylindrisches, teils konisches Gehäuse. Schwerteile 17 können in den Bodenbereich des Gehäuses absinken und ausgeschleust werden. Der Siebapparat 7 enthält ein Sieb 3, hier als Plansieb ausgeführt, welches durch einen Rotor 9 von Verstopfungen frei gehalten wird. Die Suspension, die das Sieb 3 passiert hat, sammelt sich hier im oberhalb des Siebes 3 liegenden Gutstoffraum 13 und wird als Gutstoff A7 abgeführt, vorzugsweise in den Stofflöser 1. Außerdem reichern sich innerhalb des Siebapparates 7 die am Sieb 3 zurückgehaltenen Störstoffe an. Sie werden als Rejekt R7 kontinuierlich oder in bestimmten Zeitintervallen in eine Sortiervorrichtung 5 ausgeleitet, die eine Schmutzfraktion R5 und eine Gutstofffraktion A5 erzeugt. Die bevorzugte intervallmäßige Spülung hat den Vorteil einer vollständigen oder zumindest besseren Entfernung der Störstoffe aus dem Siebapparat 7. Sie kann durch schwallartige Wasserzugabe 16 in den Siebapparat 7 verstärkt und beschleunigt werden. Die Menge des Rezirkulationsstromes A2 lässt sich durch Ventile 14 und 15 regulieren; gegebenenfalls programmgesteuert, wenn die Spülung des Siebapparates 7 periodisch erfolgt.

Der an dieser Stelle verwendete Siebapparat kann auch eine waagerechte Achse haben, also z.B. ein Sekundärstofflöser sein, so oder ähnlich wie der in der DE 102004015011 gezeigte Siebapparat.

Als Sortiervorrichtung 5 ist eine drehbare Siebtrommel angedeutet, es sind aber auch andere entsprechend geeignete Apparate denkbar. Die Verbindung zwischen dem Rejektauslauf 6 des Siebapparates 7 und der Sortiervorrichtung 5 weist mit Vorteil hier keine weiteren Druck erhöhenden Apparate auf. Das spart Energie und apparativen Aufwand.

Das Schema dieser Figur ist prinzipiell nicht so zu verstehen, dass Größenverhältnisse und Positionen der verwendeten Apparaturen entnehmbar sind. Einzelne Details hingegen entsprechend günstigen technischen Ausführungen. So ist z.B. die Sortiervorrichtung 5 mit Vorteil geodätisch oberhalb des Stofflösers 1 anzuordnen, da dadurch der in der Sortiervorrichtung 5 gebildete Gutstoff A5 frei in den Behälter des Stofflösers 1 zurückfließen kann.

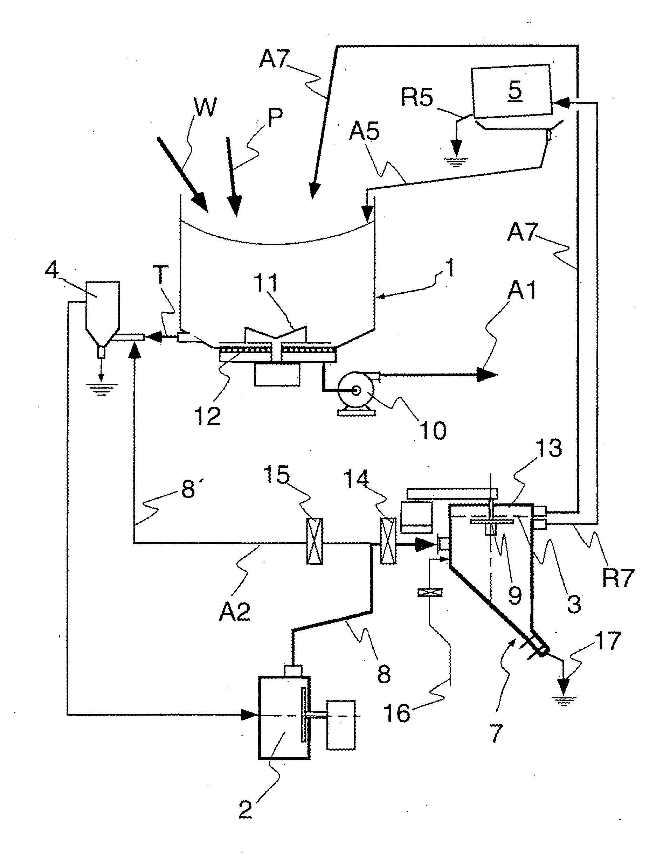

## Patentansprüche

1. Verfahren zum Suspendieren und Reinigen von störstoffhaltigen Papierrohstoffen, insbesondere von Altpapier, wobei der Papierrohstoff (P) mit Wasser (W) vermischt und zu einer störstoffhaltigen Suspension (S) aufgelöst wird,
wobei ein unsortierter Teilstrom (T) dieser Suspension (S) zunächst in einen Absetzapparat (4) und dann mit Hilfe eines Pumpapparates (2) in einen geschlossenen Siebapparat (7) geführt wird,
in dem der Teilstrom (T) mit einem Sieb (3) sortiert wird, durch das ein Gutstoffstrom (A7) hindurch geleitet wird,
wodurch sich im Siebapparat (7) am Sieb (3) zurückgehaltene Störstoffe (R7) anreichern, die aus dem Siebapparat (7) kontinuierlich oder in einstellbaren Zeitabständen abgeleitet und einer Sortiervorrichtung (5) zugeführt werden,
**dadurch gekennzeichnet,**
**dass** ein Rezirkulationsstrom (A2) aus der Druckleitung (8) des Pumpapparates (2) in den Absetzapparat (4) zurückgeführt wird.

2. Verfahren nach Anspruch 1,
**dadurch gekennzeichnet,**
**dass** die Auflösung in einem Stofflöser (1) durchgeführt wird.

3. Verfahren nach Anspruch 2,
**dadurch gekennzeichnet,**
**dass** aus dem Stofflöser (1) ein Gutstoff (A1) kontinuierlich durch ein Pulpersieb (12) abgezogen wird.

4. Verfahren nach Anspruch 3,
**dadurch gekennzeichnet,**
**dass** der Teilstrom (T) nicht durch das für den Gutstoff (A1) bestimmte Pulpersieb (12) abgezogen wird.

5. Verfahren nach einem der voran stehenden Ansprüche,
**dadurch gekennzeichnet,**
**dass** der Teilstrom (T) in seiner Feststoffzusammensetzung gröber ist als der aus dem Stofflöser abgezogene Gutstoff (A1).

6. Verfahren nach einem der voran stehenden Ansprüche,
**dadurch gekennzeichnet,**
**dass** ein Siebapparat (7) mit ebenem Sieb (3) verwendet wird, das durch einen zentralen Rotor (9) frei gehalten wird.

7. Verfahren nach einem der voran stehenden Ansprüche,
**dadurch gekennzeichnet,**
**dass** die am Sieb (3) des Siebapparates (7) zurückgehaltenen Störstoffe in Zeitintervallen aus dem Siebapparat (7) als Rejekt (R7) entfernt werden.

8. Verfahren nach Anspruch 7,
**dadurch gekennzeichnet,**
**dass** der Rejekt durch schwallartige Wasserzugabe (16) in den Siebapparat (7) ausgespült wird.

9. Verfahren nach einem der voran stehenden Ansprüche,
**dadurch gekennzeichnet,**
**dass** der Rezirkulationsstrom (A2) an einer Stelle aus der Druckleitung (8) abgeteilt wird, die vom Einlauf in den Siebapparat (7) maximal 2 m, vorzugsweise maximal 1 m, entfernt ist.

10. Verfahren nach Anspruch 9,
**dadurch gekennzeichnet,**
**dass** der Siebapparat (7) mit senkrecht stehender Achse betrieben wird und dass der Gutstoffraum (13) oberhalb des Siebes (3) angeordnet ist.

11. Verfahren nach einem der voran stehenden Ansprüche,
**dadurch gekennzeichnet,**
**dass** die Leitung zwischen dem Rejektauslauf am Siebapparat (7) und der Sortiervorrichtung (5) keine Druck erhöhenden Apparate enthält.

12. Verfahren nach einem der voran stehenden Ansprüche,
**dadurch gekennzeichnet,**
**dass** die Sortiervorrichtung (5) geodätisch mindestens 3 m höher steht als der Siebapparat (7).
